# EUROPEAN PATENT SPECIFICATION

(11) **EP 0 300 583 B1**
(45) Date of publication and mention of the grant of the patent: **08.12.1993**
(21) Application number: 88201592.8
(22) Date of filing: 22.07.1988
(51) Int. Cl.: C08G 67/02, B01J 31/28, B01J 31/18, C07F 7/08, C07F 9/50, C07F 9/70, C07F 9/90

(54) **Process for the preparation of polymers**
Verfahren zur Herstellung von Polymeren
Procédé pour la préparation de polymères

(30) Priority: 23.07.1987 NL 8701741
(43) Date of publication of application: 25.01.1989
(73) Proprietor: SHELL INTERNATIONALE RESEARCH MAATSCHAPPIJ B.V., 2596 HR Den Haag (NL)
(72) Inventor: van Doorn, Johannes Adrianus, NL-1031 CM Amsterdam (NL); Meijboom, Nicolaas, NL-1031 CM Amsterdam (NL); Snel, Johannes Jacobus Maria, NL-1031 CM Amsterdam (NL); Wife, Richard Lewin, NL-1031 CM Amsterdam (NL)

(56) References cited:
- EP-A- 0 222 454
- EP-A- 0 239 145
- EP-A- 0 263 564
- FR-A- 2 511 613
- GB-A- 1 414 662
- Transition Met. Chem., vol. 10, 1985, pages 435-436; E.C. ALVEA et al.: "Metal complexes of two potentially bidentate silicon-backbone phosphine ligands"

## Description

The invention relates to a process for the preparation of polymers of carbon monoxide with one or more olefinically unsaturated compounds.

High molecular weight linear polymers of carbon monoxide with one or more olefinically unsaturated compounds (for the sake of brevity referred to as A) in which the monomer units occur in alternating order and which polymers therefore consist of units of the general formula -CO-(A')-, wherein A' represents a monomer unit derived from a monomer A used, can be prepared by using catalyst compositions based upon:
a) a palladium compound,
b) an anion of an acid with a pKa of less than 6, and
c) a compound of the general formula R₁R₂P-R₅-PR₃R₄, wherein R₁, R₂, R₃ and R₄ represent similar of different hydrocarbon groups which may optionally be substituted with polar groups and wherein R₅ is a bivalent bridging group containing only three carbon atoms in the bridge the middle carbon atom of which forms part of a -CH₂- group. Such a process is disclosed in EP-A-222454.

Compounds that are very suited to be used in the catalyst compositions as components c) are those of the general formula R₁R₂P-R₅-PR₁R₂. These compounds can be prepared in high yield by the reaction of a compound of the general formula R₁R₂P-Y with a compound of the general formula X-R₅-X, in which general formulae Y represents an alkali metal atom and X a halogen atom.

In the afore-mentioned polymer preparation, both polymerization rates and molecular weights of the polymers obtained play an important role. On the one hand it is desirable to attain the highest possible polymerization rate during the polymer preparation, whilst on the other hand the polymers are more valuable with a view to their uses, as they have higher molecular weights. Both polymerization rates and molecular weights can be influenced by the temperature employed during polymerization. Unfortunately, the effects which the temperature has on polymerization rates and on molecular weights are opposed to one another, in that at otherwise similar reaction conditions, an increase in the reaction temperature will lead to a rise in the polymerization rate, but a decrease in the molecular weights of the polymers obtained. This means in practice that with a view to the uses of these polymers, the reaction temperature will be chosen such as to afford polymers having sufficiently high molecular weights for the relevant uses, and that the corresponding polymerization rates will have to be accepted.

A research made by the Applicant into the afore-mentioned catalyst compositions has surprisingly shown that their performance can be considerably enhanced by the incorporation as the component c) of a compound of the general formula R₁R₂P-R₆-PR₃R₄, wherein R₆ is a bivalent bridging group containing only three carbon atoms in the bridge the middle carbon atom of which forms part of a -CR₇R₈-group, wherein R₇ and R₈ represent similar or different monovalent substituents consisting of carbon, hydrogen and optionally oxygen (cf. non-prepublished earlier dated EP-A-296687). Comparison of the performances of the original catalyst compositions comprising a compound of the general formula R₁R₂P-R₅-PR₃R₄ as component c), and of the modified catalyst compositions comprising a compound of the general formula R₁R₂P-R₆-PR₃R₄ as component c), shows that at similar polymerization rates for both compositions, the use of the modified compositions results in polymers with higher molecular weights and, conversely, that when the two compositions are used to prepare polymers of similar molecular weights, the modified compositions show higher polymerization rates.

Compounds that are very suitable where their performance as the components c) in the catalyst composition is concerned are those of the general formula R₁R₂P-R₆-PR₁R₂. However, their very poor accessibility is a drawback to the use of these compounds as components c) in the catalyst compositions. Unlike compounds of the general formula R₁R₂P-R₅-PR₁R₂, which can be prepared in very high to quantitative yields by reaction of a compound R₁R₂P-Y with a compound X-R₅-X, the reaction of a compound R₁R₂P-Y with a compound X-R₆-X affords only minor yields of the desired compound R₁R₂P-R₆ -PR₁R₂.

Continued research into the above catalyst compositions has now surprisingly shown that when a compound of the general formula R₁R₂P-R₉-PR₃R₄, wherein R₉ represents a bivalent bridging group in which the bridge consists successively of a carbon atom, a silicon atom and a carbon atom, with the silicon atom forming part of a -SiR₇R₈- group, is taken up in these catalyst compositions, the performance as to the relation between polymerization rate and molecular weights of the produced polymers that can be obtained is equally attractive as that obtained with a compound of the general formula R₁R₂P-R₆-PR₃R₄ as the component c). Furthermore, it has surprisingly been found that the yield problem observed in the preparation of the compounds in which the middle carbon atom of the propane chain contains two substituents R₇ and R₈, does not present itself in the preparation of compounds in which the middle carbon atom of the propane chain is replaced by a silicon atom containing two substituents R₇ and R₈. For instance, compounds of the general formula R₁R₂P-R₉-PR₁R₂ can be prepared in high yield by the reaction of a compound R₁R₂P-Y with a compound X-R₉-X, and compounds of the general formula R₁R₂P-R₉-PR₃R₄, by the reaction of a compound R₁R₂P-Y with a compound X-R₉-PR₃R₄.

The present patent application therefore relates to a process for the preparation of polymers, characterized in that a mixture of carbon monoxide and one or more olefinically unsaturated organic compounds is polymerized by using a catalyst composition based upon
a) a palladium compound,
b) an anion of an acid with a pKa of less than 6, and
c) a compound of the general formula R₁R₂P-R₉-PR₃R₄, wherein R₁, R₂, R₃ and R₄ represent similar or different hydrocarbon groups which may optionally be substituted with polar groups and wherein R₉ is a bivalent bridging group in which the bridge consists successively of a carbon atom, a silicon atom and a carbon atom, the silicon atom forming part of a -SiR₇R₈-group in which R₇ and R₈ are similar or different monovalent substituents consisting of carbon, hydrogen and optionally oxygen.

Transition Metal Chem. Vol 10, 1985, pages 435-436 discloses a palladium based catalyst composition containing (C₆H₅)₂P-CH₂-Si(CH₃)₂-CH₂-P(C₆H₅)₂. GB-1414662 discloses palladium based catalyst compositions containing (CH₃)₂Si[CH₂P(C₆H₅)₂]₂ and (C₆H₅-CH₂)(CH₃)Si[CH₂P(C₆H₅)₂]₂. However, these documents are silent with respect to polymerization of carbon monoxide with olefinically unsaturated compounds and with respect to the preparation of these compounds by reactions as indicated hereinbefore.

The palladium compound used in the catalyst compositions as component a) is preferably a palladium salt of a carboxylic acid and in particular palladium acetate. The preferred component b) in the catalyst compositions is an anion of an acid with a pKa of less than 4 (determined in aqueous solution at 18 °C) and in particular an anion of an acid with a pKa of less than 2. More specific preference is given to an anion of a sulphonic acid, such as para-toluenesulphonic acid or an anion of a carboxylic acid, such as trifluoro acetic acid. In the catalyst compositions, component b) is preferably present in a quantity of from 0.5 to 200 and in particular of from 1.0 to 100 equivalents per gram atom of palladium. Component b) may be taken up in the catalyst compositions in the form of an acid and/or in the form of a salt. Eligible salts include non-noble transition metal salts and in particular copper salts. If desired, components a) and b) may be used combined in a single compound. An example of such a compound is the complex Pd(CH₃CN)₂(O₃S-C₆H₄-CH₃)₂, which can be prepared by the reaction in acetonitrile of either palladium chloride with silver para-tosylate, or palladium acetate with para-toluenesulphonic acid.

In the catalyst compositions, component c) is preferably present in a quantity of 0.1-2 and in particular of 0.75-1.5 mol per mol of palladium compound. The groups R₁, R₂, R₃ and R₄ present in the compounds used as components c) are preferably aryl groups which may optionally be substituted with polar groups and in particular phenyl groups which may optionally be substituted with polar groups. Preferably, at least one of the groups R₁, R₂, R₃ and R₄ contains at least one polar substituent. Eligible polar substituents include dialkyl-amino groups, such as dimethyl-amino groups and alkoxy groups such as methoxy and tert.butoxy groups. Preference is given to alkoxy groups and in particular to methoxy groups, as polar substituents. Preference is further given to components c) in which at least two of the groups R₁, R₂, R₃ and R₄ contain at least one polar substituent. Furthermore, preference is given to components c) in which the groups R₁, R₂, R₃ and R₄ are similar to one another by pairs, i.e. components c) in which R₁ = R₂ and R₃ = R₄ or components c) in which R₁ = R₃ and R₂ = R₄. Particular preference is given to components c) in which the groups R₁, R₂, R₃ and R₄ are similar to one another. If one or more of the groups R₁, R₂, R₃ and R₄ are aryl groups comprising one or more polar substituents, suitably at least one of these polar substituents occupies a position ortho with respect to the phosphorus atom to which the aryl group is attached. Examples of such polar-substituted aryl groups are the 2-methoxy-phenyl group and the 2,4-dimethoxy-phenyl group. Preference is given to components c) in which at least two, and more particularly all four, of the groups R₁, R₂, R₃ and R₄ are 2-methoxy-phenyl groups.

In the compounds of the general formula R₁R₂P-R₉-PR₃R₄ which are used as components c) in the catalyst compositions of the invention, R₉ represents a bivalent bridging group in which the bridge consists successively of a carbon atom, a silicon atom and a carbon atom, the silicon atom forming part of a -SiR₇R₈- group in which R₇ and R₈ are monovalent substituents consisting of carbon, hydrogen and optionally oxygen. In components c), the groups R₇ and R₈ may be similar or different. Groups R₇ and R₈ may for instance represent two different alkyl groups or two different aryl groups. Either one of the groups R₇ and R₈ may also represent an alkyl group while the other represents an aryl group. In addition to carbon and hydrogen, the groups R₇ and R₈ may include oxygen. Examples of such groups are alkyl-O-CH₂- groups, such as the CH₃-O-CH₂-group. If desired, the groups R₇ and R₈ which are interconnected through the central silicon atom of the 2-silapropane chain, may include an additional bond, thus forming part of a cyclic structure together with the central silicon atom of the 2-silapropane chain. Such a situation presents itself in components c) wherein the groups R₇ and R₈ together form a -CH₂-CH₂-CH₂-CH₂- or a -CH₂-O-C(CH₃)₂-O-CH₂- group. Preference is given to components c) in which the bivalent bridging group R₉ is a -CH₂-SiR₇R₈-CH₂- group and in which the groups R₇ and R₈ are similar to one another. Further, preference is given to components c) in which the groups R₇ and R₈ are alkyl groups and more particularly to components c) in which the groups R₇ and R₈ are both methyl groups. Compounds that are very suited to be used as components c) in the catalyst compositions of the invention are 2,2-dimethyl-1,3-bis(diphenyl-phosphino)-2-silapropane, and 2,2-dimethyl-1,3-bis[di(2-methoxy-phenyl)-phosphino]-2-silapropane.

Compounds of the general formula R₁R₂P-R₉-PR₃R₄ in which at least one of the groups R₁, R₂, R₃ and R₄ contains at least one polar substituent can be prepared by reaction of a compound of the general formula R₁R₂P-Y with a compound of the general formula X-R₉-PR₃R₄. If the general formula R₁R₂P-R₉-PR₁R₂ can be used to represent the compounds, these can be prepared by reaction of a compound of the general formula R₁R₂P-Y with a compound of the general formula X-R₉-X. Exemplary of these compounds, which can be represented by the general formula (R₁)₂P-R₉-P(R₁)₂, is the compound 2,2-dimethyl-1,3-bis[di(2-methoxy-phenyl)-phosphino]-2-silapropane which was mentioned hereinbefore as a suitable component c).

In order to enhance the activity of the present catalyst compositions, it is preferred to incorporate a 1,4-quinone as a component d). In addition to optionally alkyl-substituted 1,4-benzoquinones, other 1,4-quinones, such as optionally alkyl-substituted 1,4-naphthoquinones, are also eligible for use. It is preferred to use 1,4-quinone and 1,4-naphthoquinone as a promoter. The quantity of 1,4-quinone used preferably amounts to 10-1000 mol and in particular 25-250 mol per gram atom of palladium.

The polymerization by using the catalyst compositions according to the invention is preferably carried out in a liquid diluent. Very suitable liquid diluents are lower alcohols, such as methanol and ethanol. The polymerization may also be performed in the gaseous phase, if desired.

Eligible olefinically unsaturated organic compounds that can be polymerized with carbon monoxide with the aid of the catalyst compositions according to the invention are both compounds consisting exclusively of carbon and hydrogen and compounds which, in addition to carbon and hydrogen, contain one or more heteroatoms. The catalyst compositions according to the invention are preferably used for preparing polymers of carbon monoxide with one or more olefinically unsaturated hydrocarbons. Examples of suitable hydrocarbon monomers are ethene and other α-olefins, such as propene, butene-1, hexene-1 and octene-1, as well as styrene and alkyl-substituted styrenes, such as p-methyl styrene and p-ethyl styrene. The catalyst compositions according to the invention are especially suited to be used in the preparation of copolymers of carbon monoxide with ethene and in the preparation of terpolymers of carbon monoxide with ethene and another olefinically unsaturated hydrocarbon, in particular propene.

The quantity of catalyst composition used in the preparation of the polymers may vary within wide ranges. Per mol of olefinically unsaturated compound to be polymerized, such a quantity of catalyst is preferably used as to contain 10⁻⁷-10⁻³, and in particular 10⁻⁶-10⁻⁴, gram atom of palladium.

The preparation of the polymers is preferably carried out at a temperature of 20-200 °C and a pressure of 1-200 bar and in particular at a temperature of 30-150 °C and a pressure of 20-100 bar. In the mixture to be polymerized, the molar ratio of the olefinically unsaturated organic compounds relative to carbon monoxide is preferably 10:1-1:5 and in particular 5:1-1:2. The carbon monoxide used in the polymer preparation of the invention need not be pure. It may contain such contaminants as hydrogen, carbon dioxide and nitrogen.

According as the polymers prepared according to the invention have higher molecular weights, their intrinsic viscosities too will as a rule be higher. In order to determine the intrinsic viscosity of a polymer prepared according to the invention, four solutions are first of all prepared by dissolving the polymer in m-cresol at 100 °C, at four different concentrations. Then the viscosity at 100 °C of each of these solutions relative to that of m-cresol at 100 °C is determined in a viscometer. When Tₒ represents the efflux time of m-cresol and Tₚ the efflux time of the polymer solution, the relative viscosity (ηᵣₑₗ) is determined by ηᵣₑₗ = Tₚ/Tₒ. The inherent viscosity (ηᵢₙₕ) can be calculated from ηᵣₑₗ, according to the formula: ${\text{η}}_{\text{inh}} {\text{= ln η}}_{\text{rel}} \text{/ c}$ , wherein c represents the polymer concentration as grams per 100 ml of solution. Plotting of the ηᵢₙₕ found for each of the four polymer solutions against the corresponding concentration (c) and subsequent extrapolation to c=0 leads to the intrinsic viscosity [η] as dl/g, which will hereinafter be referred to not as 'intrinsic viscosity', but by the designation recommended by the International Union of Pure and Applied Chemistry of 'Limiting Viscosity Number' (LVN).

The invention is now illustrated with the aid of the following examples.

### Example 1

1,3-bis[di(2-methoxy-phenyl)-phosphino]propane was prepared as follows. To 250 ml of liquid ammonia in a stirred reaction vessel which was kept at -78 °C by cooling, were successively added 35 mmol of sodium, 17.5 mmol of tri(2-methoxy-phenyl) phosphine and 25 ml of tetrahydrofuran. After 6 hours, 8.75 mmol of ammonium chloride was added to the reaction mixture, followed after 15 minutes by 8.75 mmol of 1,3-dichloro propane. After 100 ml of tetrahydrofuran was added, ammonia was evaporated away and the residue was refluxed for another hour. After the solvent was removed in vacuo, dichloro methane and an aqueous solution of ammonium chloride were added to the residue. The organic layer was separated off, dried and filtered. Finally, the solvent was removed. From analysis of the residue it became apparent that the 1,3-bis[di(2-methoxy-phenyl)-phosphino]propane had been obtained in quantitative yield, calculated on the quantity of 1,3-dichloro propane used.

### Example 2

2,2-dimethyl-1,3-bis[di(2-methoxy-phenyl)-phosphino] propane was prepared substantially in the same way as the 1,3-bis[di(2-methoxy-phenyl)-phosphino] propane of Example 1, except for the following differences
a) to the liquid ammonia were successively added 30 mmol of sodium, 15 mmol of tri(2-methoxy-phenyl) phosphine and 100 ml of tetrahydrofuran,
b) to the reaction mixture were added 7.5 mmol of ammonium chloride and 7.5 mmol of 1,3-dichloro-2,2-dimethyl propane, and
c) after evaporation of ammonia, the residue was refluxed for another seven hours.

From analysis of the residue it became apparent that the 2,2-dimethyl-1,3-bis[di(2-methoxy-phenyl)-phosphino] propane had been obtained in a yield of 11%, calculated on the quantity of 1,3-dichloro-2,2-dimethyl propane used.

### Example 3

2,2-dimethyl-1,3-bis[di(2-methoxy-phenyl)-phosphino]-2-silapropane was prepared substantially in the same way as the 1,3-bis[di(2-methoxy-phenyl)-phosphino] propane of Example 1, except for the following differences
a) to 275 ml of liquid ammonia were successively added 58.7 mmol of sodium, 29.35 mmol of tri(2-methoxy-phenyl) phosphine and 50 ml of tetrahydrofuran,
b) to the reaction mixture were added 29.35 mmol of ammonium chloride and 14.68 mmol of 1,3-dichloro-2,2-dimethyl-2-silapropane, and
c) after evaporation of ammonia, the residue was refluxed for another 30 minutes.

From analysis of the residue it became apparent that the 2,2-dimethyl-1,3-bis[di(2-methoxy-phenyl)-phosphino]-2-silapropane had been obtained in a yield of 85%, calculated on the quantity of 1,3-dichloro-2,2-dimethyl-2-silapropane used. Crystallization afforded the pure diphosphine in a yield of 80%, calculated on the quantity of dichloro compound used.

### Example 4

2,2-dimethyl-1,3-bis(diphenyl-phosphino)-2-silapropane was prepared substantially in the same way as the 1,3-bis[di(2-methoxy-phenyl)-phosphino] propane of Example 1, except for the following differences
a) to 1 l of liquid ammonia were successively added 7.1 g of sodium and 40 g of triphenyl phosphine; no tetrahydrofuran was added, and
b) 8.15 g of ammonium chloride and 11.9 g of 1,3-dichloro-2,2-dimethyl-2-silapropane were added to the reaction mixture.

From analysis of the residue it became apparent that the 2,2-dimethyl-1,3-bis(diphenyl-phosphino)-2-silapropane had been obtained in a yield of 95%, calculated on the quantity of 1,3-dichloro-2,2-dimethyl-2-silapropane used. Crystallization afforded the pure diphosphine in a yield of 91%, calculated on the quantity of dichloro compound used.

### Example 5

2,2-dimethyl-1,3-bis(dicyclohexyl-phosphino) propane was prepared by the reaction in tetrahydrofuran of lithium dicyclohexyl phosphide with 1,3-dichloro-2,2-dimethyl propane. The yield was about 20%, calculated on the quantity of dichloro compound used.

### Example 6

2,2-dimethyl-1-diphenyl-phosphino-3-di(2-methoxy-phenyl)-phosphino propane was prepared by the reaction in tetrahydrofuran of sodium di(2-methoxy-phenyl) phosphide with 1-chloro-3-diphenyl-phosphino-2,2-dimethyl propane. The yield was about 15%, calculated on the quantity of chloro compound used.

### Example 7

A carbon monoxide/ethene copolymer was prepared as follows. A mechanically stirred autoclave of 300 ml capacity was charged with 200 ml of methanol. The air present in the autoclave was expelled therefrom by pressurizing the autoclave with carbon monoxide until a pressure of 50 bar was reached and then releasing the pressure and repeating this procedure twice over. After the contents of the autoclave had been brought to a temperature of 97 °C, a 1:1 carbon monoxide/ethene mixture was introduced until a pressure of 55 bar was reached. A catalyst solution was then introduced into the autoclave, consisting of:
6 ml of methanol,
0.02 mmol of palladium acetate,
0.04 mmol of trifluoro acetic acid,
0.02 mmol of 1,3-bis[(di(2-methoxy-phenyl)-phosphino] propane, and 4 mmol of 1,4-benzoquinone.
The pressure was maintained at 55 bar by introducing a 1:1 carbon monoxide/ethene mixture. After 3 hours the polymerization was terminated by cooling the reaction mixture down to room temperature and releasing the pressure. The copolymer was filtered off, washed with methanol and dried at 70 °C.

Thus, a copolymer having an LVN of 1.0 dl/g was prepared at a polymerization rate of 12.2 kg copolymer/g palladium/hour.

### Example 9

A carbon monoxide/ethene copolymer was prepared substantially in the same way as the copolymer of Example 7, except for the following differences:
a) the polymerization temperature was 89 °C instead of 97 °C, and
b) the component c) used was 2,2-dimethyl-1,3-bis[(di(2-methoxy-phenyl)-phosphino]-2-silapropane instead of 1,3-bis[di(2-methoxy-phenyl)-phosphino] propane.

Thus, a copolymer having an LVN of 1.0 dl/g was prepared at a polymerization rate of 19.0 kg copolymer/g palladium/hour.

Example 9 is according to the invention. Examples 3 and 4 describe the preparation of diphosphines of the general formula (R₁)₂P-CH₂-Si(CH₃)₂-CH₂P(R₁)₂.

Example 9 describes a polymer preparation by using a catalyst composition of the invention. Examples 1-7 are outside the scope of the invention. They have been included in the patent application for comparison.

With the aid of ¹³C-NMR analysis it was established that the carbon monoxide/ethene copolymers prepared according to Examples 7 and 9 had an alternating structure and consisted therefore of units of the formula -(CO)-(C₂H₄)-. Comparison of Example 1 (quantitative yield) with Example 2 (11% yield) demonstrates the considerable decrease in diphosphine yield which results from replacing a compound X-CH₂-CH₂-CH₂-X with a compound X-CH₂-C-(CH₃)₂-CH₂-X as the dihalo compound in the diphosphine synthesis. Comparison of Example 2 (11% yield) with Example 3 (85% yield) demonstrates the marked increase in diphosphine yield which results from replacing a compound X-CH₂-C(CH₃)₂-CH₂-X with a compound X-CH₂-Si(CH₃)₂-CH₂-X as the dihalo compound in the diphosphine synthesis. Like Example 3, Example 4 demonstrates that diphosphines in which the central atom of the bridging group contains two substituents can be prepared in high yield if the central atom is a silicon atom. Examples 5 and 6 (20 and 15% yield, respectively) demonstrate that in the preparation of diphosphines in which the central carbon atom of the bridging group contains two substituents yields are low.

## Claims

1. Process for the preparation of polymers, characterized in that a mixture of carbon monoxide and one or more olefinically unsaturated organic compounds is polymerized by using a catalyst composition based upon
a) a palladium compound,
b) an anion of an acid with a pKa of less than 6, and
c) a compound of the general formula R₁R₂P-R₉-PR₃R₄,wherein R₁, R₂, R₃ and R₄ represent similar or different hydrocarbon groups which may optionally be substituted with polar groups and wherein R₉ is a bivalent bridging group in which the bridge consists successively of a carbon atom, a silicon atom and a carbon atom, the silicon atom forming part of a -SiR₇R₈-group in which R₇ and R₈ are similar or different monovalent substituents consisting of carbon, hydrogen and optionally oxygen.

2. Process as claimed in claim 1, characterized in that the groups R₁, R₂, R₃ and R₄ are phenyl groups which carry ortho-alkoxy groups.

3. Process as claimed in claim 2, characterized in that at least two of the groups R₁, R₂, R₃ and R₄ are 2-methoxy-phenyl groups.

4. Process as claimed in one or more of claims 1-4, characterized in that the bivalent bridging group R₉ present in component c) is a group -CH₂-SiR₇R₈-CH₂-, wherein the monovalent substituents R₇ and R₈ are alkyl groups, preferably methyl groups.

5. Process as claimed in claim 4, characterized in that as component c) a diphosphine is chosen from the group made up of 2,2-dimethyl-1,3-bis(diphenyl-phosphino)-2-silapropane and 2,2-dimethyl-1,3-bis[di(2-methoxy-phenyl)-phosphino]-2-sila-propane.

6. Process as claimed in one or more of claims 1-5, characterized in that the catalyst composition comprises in addition a 1,4-quinone as component d).

## Patentansprüche

1. Verfahren zur Herstellung von Polymeren, dadurch gekennzeichnet, daß ein Gemisch aus Kohlenmonoxid und einer oder mehreren olefinisch ungesättigten organischen Verbindungen unter Anwendung eines Katalysators polymerisiert wird, der auf
a) einer Palladiumverbindung,
b) einem Anion einer Säure mit einem pKA-Wert von kleiner als 6 und
c) einer Verbindung der allgemeinen Formel R₁R₂P-R₉-PR₃R₄ beruht,worin R₁, R₂, R₃ und R₄ gleiche oder verschiedene Kohlenwasserstoffgruppen bedeuten, die gegebenenfalls durch polare Gruppen substituiert sind, und worin R₉ eine zweiwertige Brückengruppe bezeichnet, worin die Brücke aufeinanderfolgend aus einem Kohlenstoffatom, einem Siliziumatom und einem Kohlenstoffatom besteht, worin das Siliziumatom Teil einer -SiR₇R₈-Gruppe ist, worin R₇ und R₈ gleiche oder verschiedene einwertige Substituenten sind,die aus Kohlenstoff, Wasserstoff und gegebenenfalls Sauerstoff bestehen.

2. Verfahren nach Anspruch 1, dadurch gekennzeichnet, daß die Gruppen R₁, R₂,R₃ und R₄ Phenylgruppen sind, die ortho-Alkoxygruppen tragen.

3. Verfahren nach Anspruch 2, dadurch gekennzeichnet, daß wenigstens zwei der Gruppen R₁, R₂,R₃ und R₄ 2-Methoxyphenylgruppen sind.

4. Verfahren nach einem oder mehreren der Ansprüche 1 bis 3, dadurch gekennzeichnet, daß die in der Komponente c) vorliegende zweiwertige Brückengruppe R₉ eine Gruppe -CH₂-SiR₇R₈-CH₂- ist,worin die einwertigen Substituenten R₇ und R₈ Alkylgruppen, vorzugsweise Methylgruppen sind.

5. Verfahren nach Anspruch 4, dadurch gekennzeichnet, daß als Komponente c) ein Diphosphin aus der aus 2,2-Dimethyl-1,3-bis(diphenyl-phosphino)-2-silapropan und 2,2-Dimethyl-1,3-bis[di(2-methoxyphenyl)-phosphino]-2-silapropan bestehenden Gruppe gewählt wird.

6. Verfahren nach einem oder mehreren der Ansprüche 1 bis 5, dadurch gekennzeichnet, daß die Katalysatorzusammensetzung zusätzlich ein 1,4-Chinon als Komponente d) enthält.

## Revendications

1. Procédé pour la préparation de polymères, caractérisé en ce qu'un mélange de monoxyde de carbone et d'un ou de plus d'un composé organique à insaturation oléfinique est polymérisé en utilisant une composition catalytique basée sur :
a) un composé du palladium ;
b) un anion d'un acide présentant un pKa inférieur à 6, et
c) un composé de la formule générale R₁R₂P-R₉-PR₃R₄, dans laquelle R₁, R₂, R₃ et R₄ représentent des groupes hydrocarbone, identiques ou différents, qui peuvent être, le cas échéant, substitués par des groupes polaires et dans laquelle R₉ est un groupe pontant dans lequel le pont est constitué successivement d'un atome de carbone, d'un atome de silicium et d'un atome de carbone, l'atome de silicium formant partie d'un groupe -SiR₇R₈- dans lequel R₇ et R₈ sont des substituants monovalents, identiques ou différents, constitués de carbone, d'hydrogène et, le cas échéant, d'oxygène.

2. Procédé tel que revendiqué dans la revendication 1, caractérisé en ce que les groupes R₁, R₂, R₃ et R₄ sont des groupes phényle qui portent des groupes orthoalkoxy.

3. Procédé tel que revendiqué dans la revendication 2, caractérisé en ce qu'au moins deux des groupes R₁, R₂, R₃ et R₄ sont des groupes 2-méthoxy-phényle.

4. Procédé tel que revendiqué dans une ou plus d'une des revendications 1 à 4, caractérisé en ce que le groupe pontant bivalent R₉, présent dans le composant c) est un groupe -CH₂-SiR₇R₈-CH₂-, dans lequel les substituants monovalents R₇ et R₈ sont des groupes alkyle, de préférence des groupes méthyle.

5. Procédé tel que revendiqué dans la revendication 4, caractérisé en ce que, en tant que composant d), on choisit une diphosphine dans le groupe constitué par le 2,2-diméthyl-1,3-bis(diphényl-phosphino)-2-silapropane et le 2,2-diméthyl-1,3-bis[di(2-méthoxy-phényl)-phosphino]-2-silapropane.

6. Procédé tel que revendiqué dans une ou plus d'une des revendications 1 à 5, caractérisé en ce que la composition catalytique comprend en outre une 1,4-quinone en tant que composant d).
